# FASCICULE DE BREVET EUROPEEN

(11) **EP 3 221 815 B1**
(45) Date de publication et mention de la délivrance du brevet: **19.05.2021**
(21) Numéro de dépôt: 15816814.6
(22) Date de dépôt: 16.11.2015
(51) Int. Cl.: G06F 21/44, H04W 12/06, H04W 12/00, H04W 4/80, G06Q 20/32, G06Q 20/38

(54) **PROCÉDÉ DE SÉCURISATION D'UN JETON DE PAIEMENT.**
VERFAHREN ZUR SICHERUNG VON ZAHLUNGSTRANSAKTIONSTOKEN
METHOD FOR SECURING A PAYMENT TOKEN

(30) Priorité: 17.11.2014 FR 1461087
(43) Date de publication de la demande: 27.09.2017
(73) Titulaire: IDEMIA France, 92700 Colombes (FR); Oberthur Technologies of America Corp., Wilmington, DE 19801 (US)
(72) Inventeur: LASSOUAOUI, Eric, 92700 Colombes (FR); LEDRU, Philippe, 92700 Colombes (FR); LIMOUSY, Francis, 92700 Colombes (FR)
(74) Mandataire: Cabinet Beau de Loménie
(86) Numéro de dépôt international: PCT/FR2015/053079
(87) Numéro de publication internationale: WO 2016/079403

(56) Documents cités:
- WO-A1-2012/040377
- US-A1- 2014 279 476

## Description

Le domaine de l'invention concerne un procédé de sécurisation d'un jeton de paiement dérivé d'un instrument de paiement, un terminal mobile et un serveur de génération d'un jeton de paiement.

Les fraudes à la carte de paiement sont aujourd'hui encore existantes malgré la sophistication de la sécurisation des données bancaires et les mesures de vérification d'une transaction par le réseau de paiement. Une carte de paiement est protégée par une vérification d'un code personnel mémorisé dans une puce électronique ainsi que l'utilisation d'algorithmes dynamiques pour la vérification des données de la transaction bancaire.

Avec le développement de l'économie numérique, la part de transaction réalisée sur internet augmente de jour en jour. Une nouvelle tendance est également l'intégration de carte de paiement virtuelle hébergée sur une application de paiement mobile d'un téléphone portable. Un souscripteur possède ainsi une version dématérialisée de sa carte bancaire qu'il peut utiliser pour un paiement en champ proche au moyen de la technologie NFC (« Near Field Contact », en anglais).

Cette nouvelle économie est une opportunité pour les institutions bancaires mais présente également des risques de fraudes non négligeables du fait de l'exposition des données bancaires, notamment le numéro de carte bancaire, le cryptogramme de sécurité et la date de validité de la carte. Les réfractaires à la technologie de paiement en champ proche dénoncent notamment la vulnérabilité des données bancaires lors de la communication en champ proche car les données sont transmises sans chiffrement. Il existe en particulier des dispositifs d'interception des données pouvant être utilisés lors d'une transaction.

Par ailleurs, il n'est pas rare que des pirates informatiques dérobent les données bancaires sur le serveur d'un marchand en ligne.

En réponse à ces fraudes bancaires, les institutions bancaires cherchent des solutions pour ne pas exposer les données bancaires d'un souscripteur de carte bancaire. Il existe aujourd'hui des systèmes d'hébergement des données bancaires sur des serveurs sécurisés des banques et des solutions de génération de jetons de paiement restrictifs (appelés « payment token » en anglais) qui sont dérivés de la carte de paiement d'un souscripteur. Ces jetons sont restrictifs dans le sens où ils peuvent comporter des restrictions d'usage, par exemple être valides dans une période limitée, auprès d'un unique marchand ou plafonnés à un montant maximal de transaction. Ces solutions de paiement sont désignées par HCE pour « Host Card Emulation » en anglais. En cas de vol des données du jeton, l'exposition financière est réduite.

Une architecture HCE nécessite un serveur de génération de jetons dérivés d'une carte bancaire par des algorithmes de diversification, des serveurs distants de provisionnement des jetons sur une application bancaire hébergée sur l'environnement d'exploitation d'un terminal portable (téléphone cellulaire ou tablette par exemple) et un serveur de vérification du jeton capable de déterminer les données bancaires d'un souscripteur correspondant au jeton de paiement.

Dans cette architecture un souscripteur d'une carte bancaire peut posséder une carte bancaire sous diverses formes, une carte physique à puce électronique ou à bande magnétique, une carte virtuelle hébergée dans un porte monnaie électronique sur son téléphone portable (couramment appelé « Mobile Wallet » en anglais) ou une carte virtuelle hébergée sur un serveur distant (couramment appelé « Cloud Wallet » en anglais). On connaît la demande de brevet américain US20130200146A1 décrivant une solution d'hébergement sur un serveur distant d'une carte bancaire virtuelle.

Néanmoins, même si un jeton de paiement possède des restrictions d'utilisation, il reste exposé au vol entre le moment où il est provisionné sur un téléphone portable et le moment de son utilisation. En effet, le souscripteur peut prévoir de provisionner sur son téléphone un lot de jetons pour des multiples paiements.

De plus, les fabricant de téléphone et les institutions bancaires désirent proposer des portes monnaies électroniques sur un téléphone portable en s'affranchissant des contraintes d'une puce sécurisée et de proposer une solution de paiement entièrement logicielle. Une telle solution est particulièrement exposée au vol de données.

Il existe donc un besoin de trouver de nouvelles mesures de sécurisation des jetons de paiement sur un téléphone portable, notamment lorsque les jetons sont hébergés en dehors d'une puce sécurisée.

Le document de l'état de la technique US2012/040377-A1 divulgue un procédé de paiement utilisant un téléphone portable. Le document de l'état de la technique US2014/0279476-A1 divulgue un procédé de paiement et une carte de crédit.

L'invention concerne un procédé de sécurisation d'un premier jeton dérivé d'un instrument de paiement d'un souscripteur pouvant être hébergé dans un terminal mobile par une application de paiement.

Selon l'invention, le procédé comprend les étapes successives suivantes :
- le pairage d'une part d'un identifiant du terminal mobile et de l'instrument de paiement et d'autre part d'un cryptogramme personnel et de l'instrument de paiement,
- le provisionnement du premier jeton à l'application de paiement,
- la réception de données d'une transaction de paiement par l'application de paiement,
- la génération d'un deuxième jeton de paiement sécurisé par le chiffrement d'au moins le premier jeton, les données de transaction, l'identifiant du terminal et le cryptogramme personnel.

Plus précisément, le pairage est opéré à la suite d'un protocole d'authentification réussi entre l'application de paiement et un serveur distant d'authentification.

Selon une variante, le pairage est opéré lorsque l'instrument de paiement est enregistré dans l'application de paiement.

Selon une variante, le premier jeton est une donnée aléatoire dérivée d'une donnée représentant le numéro de compte bancaire attaché à l'instrument de paiement.

Selon une variante, le chiffrement du premier jeton est exécuté au moyen d'une clé temporaire reçue d'un serveur de génération du jeton de paiement.

Selon une variante, le procédé comprend en outre la génération de l'identifiant du terminal et du cryptogramme personnel par l'application de paiement, la génération étant déclenchée par la réception des données de la transaction.

Selon une variante, la génération de l'identifiant du terminal et du cryptogramme personnel par l'application de paiement comprend la lecture dans une mémoire sécurisée du terminal conditionnée à la saisie d'un mot de passe personnel ou dans une autre variante l'exécution d'un calcul cryptographique conditionné à la saisie d'un mot de passe personnel.

Selon une variante, la génération de l'identifiant du terminal et du cryptogramme personnel par l'application de paiement est déclenchée par une requête d'authentification du souscripteur lors de la transaction de paiement, la transaction de paiement étant une transaction de paiement sans contact conformément à la norme ISO/IEC 14443.

De préférence, lors de l'exécution de la transaction bancaire, l'identifiant et le cryptogramme personnel sont mémorisés dans une mémoire volatile du terminal.

Il est prévu que le provisionnement du premier jeton comprend l'écriture du premier jeton dans une mémoire non volatile du terminal.

Il est prévu selon l'invention un terminal mobile comportant une application de paiement comprenant un agent de traitement d'un premier jeton dérivé d'un instrument de paiement d'un souscripteur et un moyen de réception de données d'une transaction de paiement. L'application de paiement comporte en outre:
- un moyen de pairage d'un identifiant du terminal mobile et d'un cryptogramme personnel avec l'instrument de paiement,
- et l'agent de traitement du jeton comporte un moyen de génération d'un deuxième jeton de paiement sécurisé par le chiffrement d'au moins le jeton, les données de transaction, l'identifiant du terminal mobile et le cryptogramme personnel.

Selon une variante, l'application de paiement comporte en outre un moyen de génération de l'identifiant du terminal mobile et du cryptogramme personnel par l'application de paiement.

Il est prévu également que l'invention concerne un serveur de génération d'un premier jeton comprenant un moyen de génération d'un premier jeton dérivé d'un instrument de paiement d'un souscripteur, caractérisé en ce qu'il comprend en outre,
- un moyen de pairage d'un identifiant du terminal mobile et d'un cryptogramme personnel du souscripteur avec l'instrument de paiement,
- un moyen de vérification d'un deuxième jeton de paiement sécurisé généré par le chiffrement d'au moins le premier jeton, des données de transaction, l'identifiant du terminal mobile et le cryptogramme personnel.

Selon une variante, l'identifiant du terminal mobile et le cryptogramme personnel du souscripteur sont reçus d'un serveur d'authentification.

Selon une variante, le premier jeton est généré au moyen d'un générateur aléatoire fonction d'au moins une donnée représentant le numéro de compte bancaire attaché à l'instrument de paiement.

Grâce à l'invention, l'usage du jeton de paiement est sécurisé par le pairage préalable avec l'utilisateur, via un cryptogramme personnel, et avec son terminal mobile, enregistré par un identifiant unique. L'intégration des données d'identification du terminal et de l'utilisateur permet au serveur de vérification de la transaction bancaire de contrôler que le jeton a été utilisé par le terminal et l'utilisateur enregistrés.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
La figure 1 représente l'écosystème d'une architecture de paiement de type HCE.
La figure 2 représente l'environnement d'exploitation logiciel d'un téléphone portable pour l'hébergement et la génération d'un jeton de paiement sécurisé.
La figure 3 représente un flux de séquences pour le pairage d'un utilisateur et d'un terminal mobile préalablement au provisionnement et génération d'un jeton de paiement au souscripteur.
La figure 4 représente un flux de séquences lors de l'exécution d'une transaction bancaire et la génération d'un jeton de paiement sécurisé.

L'invention s'applique dans le cadre d'un système de paiement provisionnant un souscripteur d'un instrument de paiement avec des jetons de paiement sécurisés. Ce système de paiement est couramment appelé par l'acronyme HCE et les jetons de paiement sont désignés par le terme « payment token » en anglais.

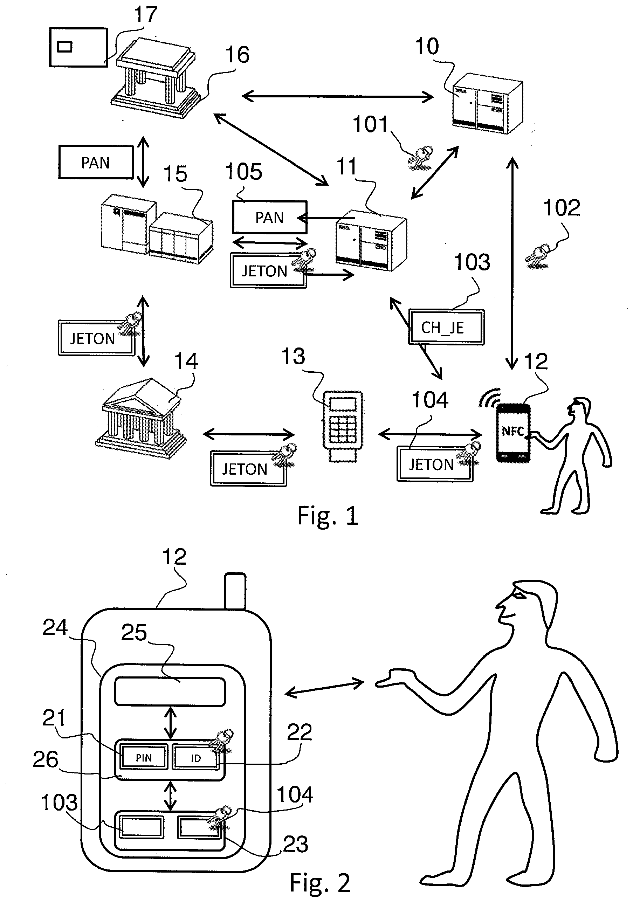

La figure 1 représente l'écosystème d'une solution de paiement HCE. Il prévoit une entité bancaire 16, une banque ou un service de paiement, pouvant émettre un instrument de paiement 17. L'instrument de paiement 17 pouvant comprendre plusieurs produits de paiement sous la forme soit d'une carte bancaire, soit d'un service de paiement en ligne via un portail internet ou soit un service de paiement au moyen de jetons de paiement pouvant être provisionnés à un terminal mobile 12 du souscripteur.

L'instrument de paiement 17 est défini :
- par des données bancaires du souscripteur, comme un numéro de compte attaché à l'instrument de paiement et des données personnelles,
- par des critères d'utilisation de l'instrument de paiement, notamment une période de validité, une zone géographique, un plafond de transaction,
- et par des données de sécurisation, comme par exemple le cryptogramme de sécurité ou des mécanismes de sécurité électroniques embarqués dans une carte de paiement permettant la vérification des données d'une transaction bancaire.

Dans le cas d'un terminal mobile 12 destiné à recevoir des jetons de paiement, les mécanismes de sécurité peuvent être hébergés dans un module sécurisé soudé dans le terminal, par exemple un circuit intégré de type NFC, ou être hébergés au niveau d'un environnement sécurisé (appelé TEE, pour « Trusted Execution Environment » en anglais). Il s'agit dans ce dernier cas d'une solution entièrement logicielle dans laquelle la zone applicative de l'environnement d'exploitation du terminal mobile exécutant une application de paiement est considérée comme étant de confiance par divers mécanismes de sécurité. Ces mécanismes peuvent être la vérification de la zone mémoire, ou des protocoles d'authentification avec un serveur distant d'authentification 10 pour l'installation d'applications ou de profils de paiement. Il sera étudié par la suite plus en détail les fonctions du terminal mobile 12 pouvant générer le jeton de paiement sécurisé 104 utilisé dans le cadre de l'invention.

De préférence, Le terminal mobile 12 comprend des moyens de communication pour recevoir et émettre des données à distance via le réseau téléphonique cellulaire, un réseau de données de type IP via le réseau téléphonique ou un réseau de données de type IP via un réseau à moyenne portée, par exemple le WIFI.

Il est prévu dans le cadre de l'invention un serveur d'authentification 10 géré par l'institution bancaire 16 ou par un opérateur tiers de services d'authentification. Le serveur d'authentification 10 échange des moyens cryptographiques 102 avec le terminal mobile 12. Ces moyens cryptographiques 102 sont par exemple des clés cryptographiques de sessions, des numéros de transaction temporaires ou des algorithmes de cryptographie permettant d'opérer un protocole d'échange sécurisé. Ces moyens cryptographiques sont échangés via un canal sécurisé pouvant être un protocole de communication HTTPS (« Hyper Text Transfert Protocol Secure » en anglais), CAT_TP (« Card Application Toolkit Transport Protocol ») ou SMS (« Short Message Service »).

Par ailleurs, le serveur d'authentification 10 peut échanger des informations avec l'entité bancaire 16 via un réseau sécurisé de communication de données à distance sans fil ou via un réseau de communication filaire si le serveur d'authentification 10 est opéré par l'entité bancaire 16. Ainsi, l'entité bancaire 16 peut transmettre des données personnelles et bancaires d'un souscripteur au serveur d'authentification 10 pour les besoins des protocoles d'authentification entre le terminal mobile 12 du souscripteur et le serveur d'authentification.

Un serveur 11 de génération de jetons 103 dérivés de l'instrument de paiement 17 est également prévu. Le serveur 11 comprend des moyens cryptographiques pour générer un jeton 103 à partir de données bancaires 105 attachées à l'instrument de paiement 17.

Un générateur de données aléatoires peut générer un jeton 103 à partir des données bancaires 105 et d'un moyen de diversification ou dérivation, par exemple un compteur. D'autres moyens de diversification peuvent être mises en œuvre pour la génération du jeton 103 dans le serveur 11.

On notera qu'il est prévu que les données bancaires 105 exploitées par le générateur de données aléatoires peuvent être retrouvées par le serveur 11 de génération de jetons ou par un serveur de vérification partenaire sur la base des informations du jeton de paiement sécurisé 104. Les données bancaires sont ainsi protégées et maintenues secrètes dans le du serveur 11.

Par ailleurs, le serveur 11 de génération de jeton 103 peut échanger des informations avec l'entité bancaire 16 via un réseau sécurisé de communication de données à distance sans fil ou via un réseau de communication filaire si le serveur d'authentification 11 est opéré par l'entité bancaire 16. Ainsi, l'entité bancaire 16 peut transmettre des données personnelles et bancaires d'un souscripteur au serveur d'authentification 10 pour les besoins des protocoles d'authentification entre le terminal mobile 12 du souscripteur et le serveur d'authentification.

De plus, le serveur 11 de génération de jeton peut échanger des informations avec le serveur d'authentification 10 via un réseau sécurisé de communication de données à distance sans fil ou via un réseau de communication filaire si les serveurs 10 et 11 sont en gestion par le même opérateur. Le serveur d'authentification 10 échange des moyens cryptographiques 101 avec le serveur 11 de génération de jetons 103. Ces moyens cryptographiques 101 sont par exemple des clés cryptographiques de sessions, des numéros de transaction temporaires ou des algorithmes de cryptographie permettant d'opérer un protocole d'échange sécurisé avec le terminal 12.

Le protocole d'échange sécurisé avec le terminal 12 permet notamment d'échanger des jetons 103 via un canal sécurisé pouvant être un protocole de communication HTTPS, CAT_TP ou SMS.

Un réseau sécurisé de paiement 15 peut être prévu pour transmettre les données bancaires des souscripteurs et les données de transactions bancaires respectant les spécifications des normes EMV, par exemple les données de transaction conventionnelles et les jetons de paiement sécurisés. Le réseau sécurisé de paiement 15 est opéré par un opérateur de service de paiement 14 chargé d'opérer les transactions bancaires de paiement.

L'opérateur de service de paiement utilisé le réseau sécurisé 15 pour transmettre les données de transaction reçues des marchands 13, au moyen d'un terminal de paiement ou un serveur distant de paiement. Le réseau 15 utilise un réseau de communication sans fil ou filaire sécurisé entre les terminaux de paiement.

La figure 2 décrit plus précisément le terminal 12. Il comprend une application de paiement 24, hébergée par l'environnement d'exploitation du terminal mobile 12 ou dans un module sécurisé, par exemple eUICC (pour « Embedded Universal Integrated Circuit Card).

Le terminal mobile 12 comprend des mémoires non volatiles, de type ROM (« Read Only Memory » en anglais, EEPROM (Elecrtically Erasable Read Only Memory » ou FLASH pour l'enregistrement de paramètres et du code d'exécution d'applications et du programme informatique comprenant les instructions pour la mise en œuvre du procédé de sécurisation des jetons de paiement, par exemple l'environnement d'exploitation du terminal, des applications ou des bibliothèques de fonctions spécifiques pouvant être utilisées par les applications.

Le terminal comprend notamment des bibliothèques de fonctions, classes ou méthodes, dites API pour « Application Progamming Interface » en anglais, pour les échanges avec le serveur 11 de génération de jetons, pour l'exécution de transactions de paiement avec un terminal de paiement 13 et pour l'authentification avec le serveur d'authentification 10. L'application 24 peut faire appel aux fonctions fournies par les APIs.

Le terminal mobile comprend également une mémoire vive, de type RAM (« Random Acess Memory » en anglais) pour l'enregistrement de paramètres temporaires, par exemple des données de transaction bancaire ou un jeton de paiement sécurisé 104. La mémoire vive comprend des registres adaptés pour l'enregistrement des variables et paramètres créés lors de l'exécution du programme informatique comprenant les instructions pour la mise en oeuvre du procédé de sécurisation des jetons de paiement lors de son exécution.

Le terminal 12 comprend en plus des interfaces homme-machine pour la saisie et l'affichage de données avec le souscripteur, par exemple pour la saisie d'un code personnel (code PIN en anglais, « Personal Identification Number ») et pour l'interaction avec l'application de paiement 24. Il est prévu que l'application de paiement affiche des requêtes sur un écran du terminal mobile, par exemple une requête pour approcher le terminal 12 du terminal de paiement 13, une requête de saisie d'un code personnel ou une requête pour choisir un instrument de paiement.

Le terminal mobile comprend le processeur de calcul pour l'exécution des fonctions des applications du terminal mobile 12.

L'application de paiement 24 comprend un agent de traitement 23 d'un jeton 103 dérivé d'un instrument de paiement 17 d'un souscripteur et un moyen réception de données 25 d'une transaction de paiement. L'agent de traitement 23 est une fonction de l'application de paiement 24 permettant la réception du jeton 103 envoyé du serveur 11 de génération de jetons et sa mémorisation dans une mémoire non volatile du terminal mobile. L'agent de traitement 23 est un applicatif logiciel exploitant les fonctions logicielles APIs permettant d'interagir avec le serveur 11 de génération du jeton 103.

Par ailleurs, l'application de paiement 24 héberge un ou plusieurs instruments de paiement 17. Une carte virtuelle de paiement est enregistrée sous la forme d'une application spécifique au profil de la carte de paiement et peut être mémorisée au moyen d'un identifiant d'application. L'instrument de paiement est enregistré dans l'application de paiement préalablement au premier provisionnement d'un jeton paiement.

Le moyen de réception 25 de données de transaction bancaire est une fonction de l'application de paiement 24 permettant la communication avec le terminal de paiement 13. La fonction de réception est capable de piloter un protocole d'échange sans contact selon la norme ISO/IEC 14443, d'enregistrer les données de la transaction dans une mémoire et de retourner des réponses au terminal de paiement 13.

En outre, l'application de paiement 24 comporte un moyen de pairage 26 d'un identifiant du terminal mobile 22 et d'un cryptogramme personnel 21 avec l'instrument de paiement. Il s'agit d'une fonction faisant appel à des fonctions logicielles APIs pour l'authentification avec le serveur d'authentification 10 et le serveur 11 de génération de jeton. Le pairage comprend notamment des moyens pour générer l'identifiant 22 attribué au terminal 12 et le cryptogramme 21 personnel attribué au souscripteur.

L'identifiant du terminal 22 peut être généré par le serveur d'authentification 10 et être transmis au terminal 12 pour être enregistré de façon sécurisée, par exemple encrypté au moyen d'une clé. Dans un autre variante, l'identifiant 22 peut être le numéro IMEI (« International Mobile Equipment Identity » en anglais) du terminal 12 et être transmis au serveur 10 d'authentification. Il peut être transmis par le terminal 12 lors du pairage ou par l'entité bancaire 16.

Le cryptogramme personnel 21 peut être un mot de passe, un code personnel, ou une empreinte biométrique numérique connu du souscripteur et du serveur d'authentification. Le cryptogramme personnel peut être également généré par une fonction suite à une authentification réussie à code PIN ou authentification biométrique. Dans une variante, le cryptogramme personnel 21 peut être généré à partir d'un aléatoire connu seulement du terminal 12 et du serveur d'authentification ou d'une clé de chiffrement. Des méthodes connues appelées salage permettent également de générer le cryptogramme personnel 21 à la fois par l'application de paiement 24 et à la fois par le serveur 10 d'authentification.

Le pairage est effectif lorsque l'application de paiement 24 a lié un instrument de paiement 17 avec l'identifiant 22 du terminal et le cryptogramme personnel 21. De même, le serveur 11 de génération lie l'identifiant 22 et le cryptogramme 21 avec l'instrument de paiement 17. L'identifiant 22 du terminal 12 et le cryptogramme personnel 21 permettant le pairage dans le serveur 11 sont transmis par le serveur 10 d'authentification, lequel a préalablement réussi le protocole d'authentification avec le terminal 12 et le souscripteur.

Le pairage est de préférence réalisé lors de l'enregistrement de l'instrument de paiement 17 dans le terminal mobile. L'enregistrement correspond à l'installation d'un profil de paiement numérique dans la mémoire non volatile du terminal mobile 12.

Le pairage du terminal est sécurisé par l'authentification avec le serveur 10 d'authentification.

En outre, l'agent de traitement 23 d'un jeton 103 comprend un moyen de génération d'un jeton de paiement sécurisé 104 par le chiffrement d'au moins le jeton 103, les données de transaction, l'identifiant 22 du terminal mobile et le cryptogramme personnel 21. Une clé de chiffrement du jeton et un algorithme de chiffrement de type HMAC (pour « keyed-hash message authentication code » en anglais), par exemple conforme aux recommandations OATH (« Initiative for Open Authentication »), sont utilisés pour l'exécution du chiffrement et obtenir le jeton de paiement sécurisé 104. L'algorithme de chiffrement permet une authentification mutuelle avec le serveur 11 de génération de jeton. La clé de chiffrement est transmise à l'application de paiement 24 par le serveur 11 de génération de jeton. La clé est mémorisée dans une zone sécurisée du terminal mobile, chiffrée ou non lorsqu'elle n'est pas utilisée. La clé de chiffrement peut être temporaire. Elle peut être associée à un unique jeton de paiement 103, à un lot de jeton de paiement 103 ou être limitée dans le temps.

Plus précisément, les données du jeton 103, les données de transaction du terminal de paiement 13 (montant de la transaction, numéro de transaction), l'identifiant 22 du terminal et le cryptogramme personnel 21 sont concaténés dans un bloc de données (pouvant par exemple atteindre 128 bits). Ces données concaténées sont ensuite chiffrées par l'algorithme de chiffrement au moyen de la clé de chiffrement. Le jeton de paiement sécurisé 104 généré par l'application de paiement 24 se présente sous la forme d'un cryptogramme accompagnant une requête de vérification d'une transaction bancaire comprenant au moins les données de la transaction.

On notera que la génération du jeton de paiement sécurisé 104 peut être opérée en mode hors ligne, c'est à dire qu'une connexion avec le serveur 11 de génération de jeton 103 n'est pas nécessaire lors de la transaction.

Par ailleurs, l'agent de traitement 23 comprend un moyen d'insertion du jeton de paiement sécurisé 104 dans un protocole de transaction bancaire conventionnel. Il peut être inséré dans un champ de donnée normalisé dans les protocoles de transaction EMV (« Europay Mastercard Visa », marques déposées) par exemple.

Ainsi, le jeton de paiement sécurisé 104 peut être transmis par un terminal de paiement sans modification de son protocole de communication avec le réseau de paiement 15.

Le serveur 11 de génération d'un jeton 103 comprend un moyen de génération d'un jeton dérivé de l'instrument de paiement 17. Le jeton dérivé est une donnée aléatoire. Le jeton 103 est généré à partir des données bancaires 105 de l'instrument de paiement 17 (numéro de compte associé) et d'un diversifiant. Le diversifiant représente une autorisation pour une transaction de paiement avec des critères de restriction d'usage déterminés par le serveur 11, par exemple une validité pour une ou plusieurs transactions bancaires, une validité temporelle, une validité pour un plafond de transaction.

Dans le cadre de l'invention, le serveur 11 comprend en outre, un moyen de pairage de l'identifiant du terminal mobile 22 et du cryptogramme personnel 21 du souscripteur avec l'instrument de paiement 17. Il comprend notamment dans ses bases de données bancaires, les données bancaires 105 associées à l'instrument de paiement 17 (numéro de compte associé), et l'identifiant 22 du terminal 12 et le cryptogramme personnel 21 du souscripteur qui sont attribués à l'instrument de paiement 17.

En outre, il comprend un moyen de vérification du jeton de paiement sécurisé 104 généré par le chiffrement d'au moins le jeton 103, des données de transaction, l'identifiant 22 du terminal mobile et le cryptogramme personnel 21. Il comprend notamment les moyens cryptographiques complémentaires que ceux de l'application de paiement 24 pour générer un deuxième jeton de paiement à des fins de vérification, en fonction des données de transaction transmises par la requête de vérification d'une transaction bancaire. Les moyens de vérification comprennent un moyen de génération d'un cryptogramme de vérification par le chiffrement d'au moins le jeton 103, les données de transaction, l'identifiant 22 du terminal mobile et le cryptogramme personnel 21. Une comparaison du jeton de paiement sécurisé 104 avec le cryptogramme de vérification permet d'autoriser ou non la transaction.

On notera que l'identifiant du terminal mobile 22 et le cryptogramme personnel 21 du souscripteur sont reçus du serveur d'authentification 10 ou peuvent être générés dynamiquement lors de la réception du jeton de paiement sécurisé 104 pour une vérification de la transaction bancaire.

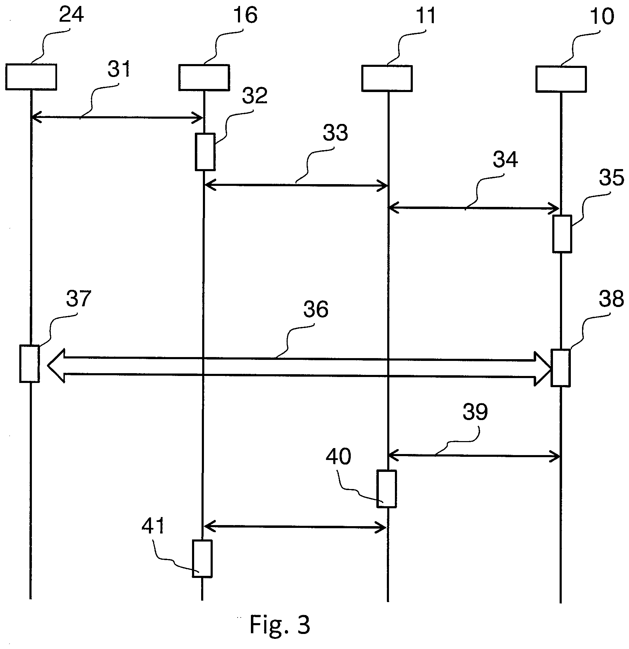

La figure 3 représente un flux de séquences d'étapes pour le pairage d'un instrument de paiement avec un identifiant 22 du terminal 12 et un cryptogramme personnel 21. Le pairage est réalisé lors de l'enregistrement de l'instrument de paiement 17 dans l'application de paiement 24 du terminal 12 du souscripteur.

A une étape 31 de requête d'enregistrement, le souscripteur via son application de paiement 24 procède à son enregistrement pour l'utilisation de l'instrument de paiement 17. La requête d'enregistrement est transmise à l'entité bancaire 16 opératrice de l'instrument de paiement.

En variante, l'étape 31 de requête d'enregistrement peut être réalisée via un portail web, ou directement à l'agence de l'entité bancaire.

L'entité bancaire 16 initie une demande d'enregistrement à une étape 32. Lors de l'étape 32, des identifiants et un mot de passe personnel à usage unique peuvent être généré et transmis au souscripteur pour initier une authentification auprès du serveur d'authentification 10. En parallèle, les identifiants et mot de passe sont communiqués au serveur 11 de génération d'un jeton de paiement lors d'une étape 33 puis au serveur 10 d'authentification lors d'une étape 34.

Lors de l'étape 33, l'entité bancaire 16 transmet également les données bancaires de l'instrument de paiement 17 permettant la réalisation d'un paiement (numéro de compte bancaire et critères de restrictions notamment).

Lors de l'étape 35, le serveur 10 d'authentification amorce un protocole d'authentification en attente de recevoir une requête de pairage issue de l'application de paiement 24 de l'utilisateur. Des jeux de clés de chiffrement et des identifiants de transaction d'authentification sont préparés pour permettre la transmission sécurisée d'un identifiant de terminal et d'un cryptogramme personnel entre l'application de paiement et le serveur d'authentification.

Lors d'une étape 37, l'application de paiement 24 initie une demande de pairage et exécute les opérations de déchiffrement et chiffrement nécessaires pour la réalisation des requêtes et réponses intervenant dans le protocole d'authentification 36.

En parallèle, le serveur 10 d'authentification, à une étape 38 exécute les opérations complémentaires pour la réalisation du protocole d'authentification pour le pairage 36 entre un identifiant du terminal mobile et l'instrument de paiement et un cryptogramme personnel du souscripteur et l'instrument de paiement.

En variante, le protocole d'authentification peut être initié par le serveur d'authentification en direction de l'application de paiement 24.

Lors du protocole d'authentification correspondant à l'exécution du pairage 36, l'identifiant 22 du terminal 12 et le cryptogramme personnel 21 sont générés, soit par le serveur 10, soit par l'application de paiement 24 et échangés mutuellement.

On notera que le pairage 36 comprend la mémorisation de l'identifiant 22 du terminal et du cryptogramme personnel 21 dans le serveur d'authentification 10 ou la mémorisation de fonctions de calcul pour la génération de l'identifiant 22 du terminal et du cryptogramme personnel 21 dans le serveur d'authentification 10.

Dans une variante, l'identifiant 22 du terminal et le cryptogramme personnel 21 sont générés dynamiquement lors de chaque transaction bancaire. L'application de paiement 24 et le serveur 10 disposent des moyens de génération qui sont échangés lors de la phase d'authentification 36. Cela peut être une application d'authentification spécifique et les algorithmes cryptographiques. Ces moyens de génération de l'identifiant 22 et du cryptogramme personnel 21 peuvent être également obtenus via un portail d'application ou être déjà installés avec l'application de paiement 24.

L'application de paiement 24 est installée via un protocole d'installation sécurisé comprenant l'installation d'un profil d'une application bancaire dans un module sécurisé NFC pour l'opération de transactions bancaires conformes à la norme ISO/IEC 14443.

Lorsque le protocole d'authentification, pour l'opération de pairage 36, se termine avec succès, lors d'une étape 39, le serveur d'authentification 10 communique au serveur 11 de génération de jeton de paiement 103 l'identifiant 22 du terminal et le cryptogramme personnel 21 parmi les moyens cryptographiques 101. Ceci aux fins de vérification des transactions de paiement utilisant les jetons de paiement.

A l'étape 40, le serveur 11 installe l'identifiant 22 du terminal et le cryptogramme personnel 21 ou les moyens de génération associés à l'instrument de paiement 17 du souscripteur.

A une étape 41, l'entité bancaire 16 est informée du succès de l'authentification et du pairage pour le fonctionnement de la solution de paiement au moyen de jeton de paiement sécurisés.

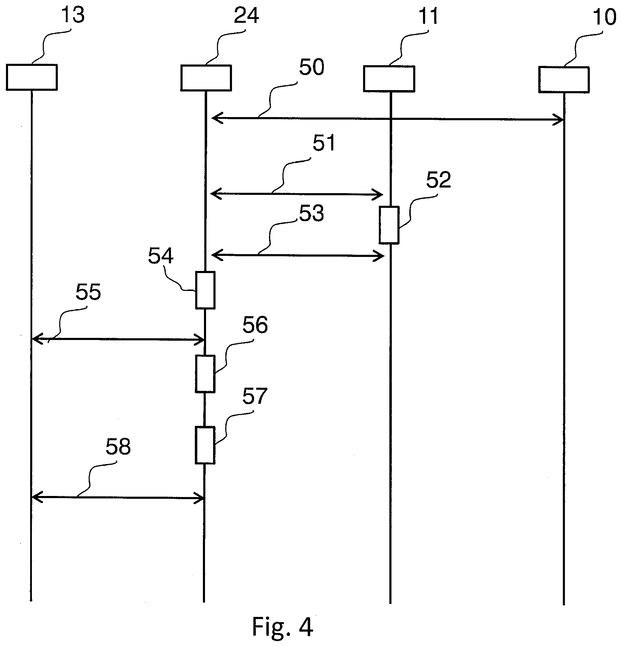

La figure 4 représente un flux de séquence lors de la génération d'un jeton de paiement sécurisé 104 au cours d'une transaction bancaire.

A une première étape 50, l'application de paiement 24 procède à une requête de provisionnement d'un jeton. Une étape d'authentification du souscripteur est opérée avec le serveur d'authentification 10. Par la vérification d'un identifiant et mot de passe personnel, ou en variante au moyen de l'identifiant 22 du terminal 12 et du cryptogramme personnel 21 générés lors de l'étape de pairage.

Si l'authentification est réussie avec le serveur d'authentification 10, l'application 24 opère à une étape 51 une demande de provisionnement d'un jeton 103 auprès du serveur 11 de génération de jeton. La demande de provisionnement est réalisée via un canal de communication sécurisé entre l'application de paiement 24 et le serveur 11, par exemple un protocole de communication HTTPS, CAT_TP ou SMS.

Lors de l'étape 52, le serveur 11 de génération de jeton génère un premier jeton 103 dérivé de l'instrument de paiement 17. Le jeton 103 est une donnée aléatoire dérivée d'une donnée 105 représentant le numéro de compte bancaire attaché à l'instrument de paiement 17. Cette donnée peut être le numéro de compte bancaire. Le jeton 103 est une donnée aléatoire définie par des critères de restriction d'utilisation, par exemple un nombre de transaction bancaire, une durée de validité ou un montant de la transaction. Un générateur aléatoire fonction d'au moins la donnée 105 représentant le numéro de compte bancaire attaché à l'instrument de paiement 17 est de préférence utilisé. Un compteur fournissant une donnée d'entrée au générateur permet de diversifier la donnée 105.

A une étape 53, le serveur 11 transmet le jeton 103 à l'application de paiement 24 via le même canal sécurisé utilisé lors de l'étape 51.

A une étape 54, l'application de paiement 24 mémorise le jeton 103 dans une zone mémoire sécurisée (non volatile) du terminal mobile 12. L'agent de traitement 23 enregistre le jeton 103 dans une zone mémoire dont l'accès est conditionné à une authentification avec le serveur d'authentification 10. Dans une variante, le jeton 103 est transmis crypté en attente d'une utilisation d'au moyen d'une clé fournie par le serveur 11.

Lors d'une étape 55, un protocole de transaction bancaire est initié avec un terminal de paiement 13. L'application 24 reçoit des requêtes de transaction et émet des réponses à ces requêtes. La transaction opérée est une transaction de paiement NFC sans contact en champ proche, par exemple conforme à la norme ISO/IEC 14443. Lors d'un premier échange, des données de transaction peuvent être transmises, par exemple un montant de transaction.

A une étape 56, l'application de paiement 24 procède à la génération de l'identifiant 22 du terminal et du cryptogramme personnel 21. La génération peut être une lecture dans une mémoire sécurisée du terminal 12 ou la génération des données par des calculs cryptographiques, par exemple un déchiffrement ou chiffrement. La génération 56 est de préférence conditionnée à la saisie et la vérification d'un mot de passe personnel (code PIN, phrase, lecture d'une donnée biométrique de type empreinte digitale ou la lecture de l'iris).

Lors de la génération 56, l'identifiant 22 et le cryptogramme 21 peuvent être mémorisés dans une mémoire volatile du terminal 12 durant l'exécution de la transaction bancaire. Après, la réalisation de la transaction bancaire, ils sont ensuite effacés pour ne pas être exposés à d'éventuels fraudeurs.

On notera que la génération 56 de l'identifiant 22 du terminal et du cryptogramme personnel 21 peut être déclenchée par une requête d'authentification du souscripteur lors d'une transaction de paiement sans contact, conformément à la norme ISO/IEC 14443.

A une étape 57, l'application de paiement 24 opère la génération d'un deuxième jeton de paiement sécurisé 104. L'application de paiement 24 réalise le chiffrement d'au moins le premier jeton 103, les données de transaction, l'identifiant 22 du terminal et le cryptogramme personnel 21. L'application 24 utilise l'algorithme de chiffrement de l'agent de traitement 23 du jeton pour générer le jeton de paiement sécurisé 104. L'algorithme de chiffrement a pour conséquence de rendre le jeton de paiement sécurisé 104 unique par terminal 12 et unique par souscripteur.

Si le jeton de paiement 104 est utilisé par un autre terminal, qui n'a pas été enregistré lors du pairage préalable et qui n'est pas en mesure de reproduire l'identifiant 22 du terminal, le serveur 11 de vérification du jeton de paiement sécurisé 104 peut détecter la situation et refuser la transaction bancaire.

De même, si le jeton de paiement 104 est utilisé par un autre souscripteur, qui n'a pas été enregistré lors du pairage préalable et qui n'est pas en mesure de reproduire le cryptogramme personnel 21, le serveur 11 de vérification du jeton de paiement sécurisé 104 peut détecter la situation et refuser la transaction bancaire.

Optionnellement, le format du jeton de paiement sécurisé 104 peut être modifié, par une fonction de hachage par exemple, pour être ensuite inséré dans un champ de donnée conforme à une transaction bancaire.

Ensuite, lors d'une étape 58 le jeton de paiement sécurisé 104 est transmis au terminal de paiement 13 lors de l'exécution de la transaction bancaire. Il est transmis en champ proche via les moyens de communication NFC, accompagné de données de la transaction bancaire, comme cela est conventionnellement opéré dans la norme EMV.

Le terminal de paiement 13 transmet ensuite le jeton de paiement sécurisé 104 au serveur 11 de génération du jeton de paiement 103 à des fins de vérification de la transaction via le réseau de paiement 15. Le serveur 11 de vérification peut être distinct du serveur 11 de génération du jeton.

Il peut être prévu qu'un même souscripteur réalise un pairage avec un deuxième terminal mobile, par exemple une tablette multimédia si le premier terminal mobile est un téléphone cellulaire. Il est prévu lors du pairage avec le deuxième terminal mobile que le serveur 10 associe à l'instrument de paiement 17 le deuxième terminal, avec un deuxième identifiant terminal. Le cryptogramme personnel 21 peut être identique.

Lorsque le serveur de vérification reçoit le jeton de paiement sécurisé 104, il opère le même calcul cryptographique que l'agent de traitement 23 de l'application de paiement 24. Une fois validé, l'ordre d'autorisation est transmis avec les données bancaires 105 de l'instrument 17 associé au jeton 103 à l'entité bancaire 16 via le réseau de paiement 15.

On notera que le premier jeton 103, transmis par le serveur 11 au terminal 12 peut être utilisé pour plusieurs transactions de paiement. Son utilisation peut être restreint pour une durée déterminée, un nombre de transactions de paiement ou un montant de transaction pouvant être la somme de plusieurs transactions de paiement.

## Revendications

1. Procédé de sécurisation d'un premier jeton (103) dérivé d'un instrument de paiement (17) d'un souscripteur pouvant être hébergé dans un terminal mobile (12) par une application de paiement (24), **caractérisé en ce qu'**il comprend les étapes successives suivantes :
- le pairage (36) d'une part d'un identifiant (22) du terminal mobile (12) et de l'instrument de paiement et d'autre part d'un cryptogramme personnel (21) et de l'instrument de paiement,
- le provisionnement (53) du premier jeton (103) à l'application de paiement (24),
- la réception (55) de données d'une transaction de paiement par l'application de paiement,
- la génération (57) d'un deuxième jeton de paiement sécurisé (104) par le chiffrement d'au moins le premier jeton (103), les données de transaction, l'identifiant (22) du terminal et le cryptogramme personnel (21),
**caractérisé en ce que**:
- le pairage (36) est opéré lorsque l'instrument de paiement (17) est enregistré dans l'application de paiement (24),
- le premier jeton (103) est une donnée aléatoire dérivée d'une donnée (105) représentant le numéro de compte bancaire attaché à l'instrument de paiement (17).

2. Procédé selon la revendication 1, **caractérisé en ce que** le pairage (36) est opéré à la suite d'un protocole d'authentification réussi entre l'application de paiement (24) et un serveur distant d'authentification (10).

3. Procédé selon l'une quelconque des revendications précédentes, **caractérisé en ce que** le chiffrement du premier jeton (103) est exécuté au moyen d'une clé temporaire reçue d'un serveur (11) de génération du premier jeton (103).

4. Procédé selon l'une quelconque des revendications précédentes, **caractérisé en ce qu'**il comprend en outre la génération (56) de l'identifiant (22) du terminal et du cryptogramme personnel (21) par l'application de paiement (24), la génération étant déclenchée par la réception (55) des données de la transaction.

5. Procédé selon la revendication 4, **caractérisé en ce que** la génération de l'identifiant (22) du terminal et du cryptogramme personnel (21) par l'application de paiement (24) comprend la lecture dans une mémoire sécurisée du terminal (12) conditionnée à la saisie d'un mot de passe personnel ou l'exécution d'un calcul cryptographique conditionné à la saisie d'un mot de passe personnel.

6. Procédé selon la revendication 4 ou 5, **caractérisé en ce que** la génération de l'identifiant (22) du terminal et du cryptogramme personnel (21) par l'application de paiement (24) est déclenchée par une requête d'authentification du souscripteur lors de la transaction de paiement, la transaction de paiement étant une transaction de paiement sans contact conformément à la norme ISO/IEC 14443.

7. Procédé selon l'une quelconque des revendications 4 à 6, **caractérisé en ce que**, lors de l'exécution de la transaction bancaire, l'identifiant (22) et le cryptogramme personnel (21) sont mémorisés dans une mémoire volatile du terminal (12).

8. Procédé selon l'une quelconque des revendications précédentes, **caractérisé en ce que** le provisionnement comprend l'écriture du premier jeton (103) dans une mémoire non volatile du terminal (12).

9. Terminal mobile comportant une application de paiement comprenant un agent de traitement (23) d'un premier jeton (103) dérivé d'un instrument de paiement (17) d'un souscripteur et un moyen de réception de données d'une transaction de paiement, **caractérisé en ce que** l'application de paiement (24) comporte en outre:
- un moyen de pairage (26) d'un identifiant du terminal mobile (22) et d'un cryptogramme personnel (21) avec l'instrument de paiement,
- et **en ce que** l'agent de traitement du premier jeton (23) comporte un moyen de génération d'un deuxième jeton de paiement sécurisé (104) par le chiffrement d'au moins le premier jeton (103), les données de transaction, l'identifiant (22) du terminal mobile et le cryptogramme personnel (21),
**caractérisé en ce que**:
- le pairage (36) est opéré lorsque l'instrument de paiement (17) est enregistré dans l'application de paiement (24),
- le premier jeton (103) est une donnée aléatoire dérivée d'une donnée (105) représentant le numéro de compte bancaire attaché à l'instrument de paiement (17).

10. Terminal selon la revendication 9, **caractérisé en ce qu'**il comporte en outre un moyen de génération de l'identifiant (22) du terminal mobile (12) et du cryptogramme personnel (21) par l'application de paiement (24).

11. Serveur de génération d'un premier jeton (11) comprenant un moyen de génération d'un premier jeton (103) dérivé d'un instrument de paiement (17) d'un souscripteur, **caractérisé en ce qu'**il comprend en outre,
- un moyen de pairage d'un identifiant (22) du terminal mobile (12) et d'un cryptogramme personnel (21) du souscripteur avec l'instrument de paiement (17),
- un moyen de vérification d'un deuxième jeton de paiement sécurisé (104) généré par le chiffrement d'au moins le premier jeton (103), des données de transaction, l'identifiant (22) du terminal mobile et le cryptogramme personnel (21),
**caractérisé en ce que**:
- le pairage (36) est opéré lorsque l'instrument de paiement (17) est enregistré dans l'application de paiement (24),
- le premier jeton (103) est une donnée aléatoire dérivée d'une donnée (105) représentant le numéro de compte bancaire attaché à l'instrument de paiement (17).

12. Serveur selon la revendication 11, **caractérisé en ce que** l'identifiant (22) du terminal mobile et le cryptogramme personnel (21) du souscripteur sont reçus d'un serveur d'authentification (10).

13. Serveur selon la revendication 11 ou 12, **caractérisé en ce que** le premier jeton (103) est généré au moyen d'un générateur aléatoire fonction d'au moins une donnée (105) représentant le numéro de compte bancaire attaché à l'instrument de paiement (17).

## Patentansprüche

1. Verfahren zur Sicherung eines ersten Tokens (103), der von einem Zahlungsinstrument (17) eines Teilnehmers abgeleitet wird, das in einem mobilen Endgerät (12) durch eine Zahlungsanwendung (24) gehostet werden kann, **dadurch gekennzeichnet, dass** es die folgenden aufeinanderfolgenden Schritte umfasst:
- die Paarung (36) von einerseits einer Kennung (22) des mobilen Endgeräts (12) und dem Zahlungsinstrument und von andererseits einem persönlichen Kryptogramm (21) und dem Zahlungsinstrument,
- die Bereitstellung (53) eines ersten Tokens (103) für die Zahlungsanwendung (24),
- den Empfang (55) von Daten einer Zahlungstransaktion durch die Zahlungsanwendung,
- die Erzeugung (57) eines zweiten gesicherten Zahlungstokens (104) durch das Verschlüsseln von mindestens dem ersten Token (103), den Transaktionsdaten, der Kennung (22) des Endgeräts und dem persönlichen Kryptogramm (21),
**dadurch gekennzeichnet, dass**:
- die Paarung (36) vorgenommen wird, wenn das Zahlungsinstrument (17) in der Zahlungsanwendung (24) aufgezeichnet wird, und
- der erste Token (103) ein zufälliges Datenelement ist, das von einem Datenelement (105) abgeleitet wird, das die Bankkontonummer darstellt, die mit dem Zahlungsinstrument (17) verknüpft ist.

2. Verfahren nach Anspruch 1, **dadurch gekennzeichnet, dass** die Paarung (36) im Anschluss an ein erfolgreiches Authentifizierungsprotokoll zwischen der Zahlungsanwendung (24) und einem entfernten Authentifizierungsserver (10) vorgenommen wird.

3. Verfahren nach einem der vorhergehenden Ansprüche, **dadurch gekennzeichnet, dass** die Verschlüsselung des ersten Tokens (103) mittels eines temporären Schlüssels ausgeführt wird, der von einem Server (11) zur Erzeugung des ersten Tokens (103) empfangen wird.

4. Verfahren nach einem der vorhergehenden Ansprüche, **dadurch gekennzeichnet, dass** es ferner die Erzeugung (56) der Kennung (22) des Endgeräts und des persönlichen Kryptogramms (21) durch die Zahlungsanwendung (24) umfasst, wobei die Erzeugung durch den Empfang (55) der Transaktionsdaten ausgelöst wird.

5. Verfahren nach Anspruch 4, **dadurch gekennzeichnet, dass** die Erzeugung der Kennung (22) des Endgeräts und des persönlichen Kryptogramms (21) durch die Zahlungsanwendung (24) das Lesen in einem gesicherten Speicher des Endgeräts (12) umfasst, das von der Eingabe eines persönlichen Passworts oder der Ausführung einer von der Eingabe eines persönlichen Passworts abhängigen kryptografischen Berechnung abhängig ist.

6. Verfahren nach Anspruch 4 oder 5, **dadurch gekennzeichnet, dass** die Erzeugung der Kennung (22) des Endgeräts und des persönlichen Kryptogramms (21) durch die Zahlungsanwendung (24) durch eine Authentifizierungsanfrage des Teilnehmers bei der Zahlungstransaktion ausgelöst wird, wobei die Zahlungstransaktion eine kontaktlose Zahlungstransaktion gemäß der Norm ISO/IEC 14443 ist.

7. Verfahren nach einem der Ansprüche 4 bis 6, **dadurch gekennzeichnet, dass** bei der Ausführung der Banktransaktion die Kennung (22) und das persönliche Kryptogramm (21) in einem flüchtigen Speicher des Endgeräts (12) gespeichert werden.

8. Verfahren nach einem der vorhergehenden Ansprüche, **dadurch gekennzeichnet, dass** die Bereitstellung das Schreiben des ersten Tokens (103) in einen nichtflüchtigen Speicher des Endgeräts (12) umfasst.

9. Mobiles Endgerät, das eine Zahlungsanwendung beinhaltet, die einen Agenten (23) zur Verarbeitung eines ersten Tokens (103), der von einem Zahlungsinstrument (17) eines Teilnehmers abgeleitet wird, und ein Mittel zum Empfang von Daten einer Zahlungstransaktion umfasst, **dadurch gekennzeichnet, dass** die Zahlungsanwendung ferner (24) beinhaltet:
- ein Mittel (26) zur Paarung einer Kennung des mobilen Endgeräts (22) und eines persönlichen Kryptogramms (21) mit dem Zahlungsinstrument,
- und dadurch, dass der Agent zur Verarbeitung des ersten Tokens (23) ein Mittel zur Erzeugung eines zweiten gesicherten Zahlungstokens (104) durch die Verschlüsselung mindestens des ersten Tokens (103), der Transaktionsdaten, der Kennung (22) des mobilen Endgeräts und des persönlichen Kryptogramms (21) beinhaltet,
**dadurch gekennzeichnet, dass**:
- die Paarung (36) vorgenommen wird, wenn das Zahlungsinstrument (17) in der Zahlungsanwendung (24) aufgezeichnet wird, und
- der erste Token (103) ein zufälliges Datenelement ist, das von einem Datenelement (105) abgeleitet wird, das die Bankkontonummer darstellt, die mit dem Zahlungsinstrument (17) verknüpft ist.

10. Endgerät nach Anspruch 9, **dadurch gekennzeichnet, dass** es ferner ein Mittel zur Erzeugung der Kennung (22) des mobilen Endgeräts (12) und des persönlichen Kryptogramms (21) durch die Zahlungsanwendung (24) beinhaltet.

11. Server zur Erzeugung eines ersten Tokens (11), der ein Mittel zur Erzeugung eines ersten Tokens (103) umfasst, der von einem Zahlungsinstrument (17) eines Teilnehmers abgeleitet wird, **dadurch gekennzeichnet, dass** er ferner umfasst:
- ein Mittel zur Paarung einer Kennung (22) des mobilen Endgeräts (12) und eines persönlichen Kryptogramms (21) des Teilnehmers mit dem Zahlungsinstrument (17),
- ein Mittel zur Überprüfung eines zweiten gesicherten Zahlungstokens (104), der durch die Verschlüsselung mindestens des ersten Tokens (103), der Transaktionsdaten, der Kennung (22) des mobilen Endgeräts und des persönlichen Kryptogramms (21) erzeugt wird,
**dadurch gekennzeichnet, dass**:
- die Paarung (36) vorgenommen wird, wenn das Zahlungsinstrument (17) in der Zahlungsanwendung (24) aufgezeichnet wird, und
- der erste Token (103) ein zufälliges Datenelement ist, das von einem Datenelement (105) abgeleitet wird, das die Bankkontonummer darstellt, die mit dem Zahlungsinstrument (17) verknüpft ist.

12. Server nach Anspruch 11, **dadurch gekennzeichnet, dass** die Kennung (22) des mobilen Endgeräts und das persönliche Kryptogramm (21) des Teilnehmers von einem Authentifizierungsserver (10) empfangen werden.

13. Server nach Anspruch 11 oder 12, **dadurch gekennzeichnet, dass** der erste Token (103) mittels eines Zufallsgenerators in Abhängigkeit von mindestens einem Datenelement (105) erzeugt wird, das die Bankkontonummer darstellt, die mit dem Zahlungsinstrument (17) verknüpft ist.

## Claims

1. A method for securing a first token (103) derived from a payment instrument (17) of a subscriber which can be hosted in a mobile terminal (12) by a payment application (24), **characterized in that** it comprises the following successive steps:
- pairing (36), on the one hand, an identifier (22) of the mobile terminal (12) and the payment instrument and, on the other hand, a personal cryptogram (21) and the payment instrument,
- provisioning (53) the first token (103) to the payment application (24),
- receiving (55) data from a payment transaction by the payment application,
- generating (57) a second secure payment token (104) by the encryption of at least the first token (103), the transaction data, the identifier (22) of the terminal and the personal cryptogram (21),
**characterized in that**:
- the pairing (36) is carried out when the payment instrument (17) is recorded in the payment application (24),
- the first token (103) is a random data derived from a data (105) representing the bank account number attached to the payment instrument (17):

2. The method according to claim 1, **characterized in that** the pairing (36) is carried out following a successful authentication protocol between the payment application (24) and a remote authentication server (10).

3. The method according to any one of the preceding claims, **characterized in that** the encryption of the first token (103) is executed by means of a temporary key received from a server (11) for generating the first token (103).

4. The method according to any one of the preceding claims, **characterized in that** it further comprises the generation (56) of the identifier (22) of the terminal and of the personal cryptogram (21) by the payment application (24), the generation being triggered by the receipt (55) of the transaction data.

5. The method according to claim 4, **characterized in that** the generation of the identifier (22) of the terminal and of the personal cryptogram (21) by the payment application (24) comprises the reading in a secure memory of the terminal (12) conditional on entering a personal password or the execution of a cryptographic calculation conditional on entering a personal password.

6. The method according to claim 4 or 5, **characterized in that** the generation of the identifier (22) of the terminal and of the personal cryptogram (21) by the payment application (24) is triggered by an authentication request from the subscriber during the payment transaction, the payment transaction being a contactless payment transaction in accordance with the standard ISO/IEC 14443.

7. The method according to any one of claims 4 to 6, **characterized in that**, during the execution of the bank transaction, the identifier (22) and the personal cryptogram (21) are stored in a volatile memory of the terminal (12).

8. The method according to any one of the preceding claims, **characterized in that** the provisioning comprises the writing of the first token (103) in a non-volatile memory of the terminal (12).

9. A mobile terminal including a payment application comprising an agent for processing (23) a first token (103) derived from a payment instrument (17) of a subscriber and a means for receiving data of a payment transaction, **characterized in that** the payment application (24) further includes:
- means for pairing (26) an identifier of the mobile terminal (22) and a personal cryptogram (21) with the payment instrument,
- and **in that** the agent for processing the first token (23) includes a means for generating a second secure payment token (104) by the encryption of at least the first token (103), the transaction data, the identifier (22) of the mobile terminal and the personal cryptogram (21),
**characterized in that**:
- the pairing (36) is carried out when the payment instrument (17) is recorded in the payment application (24),
- the first token (103) is a random data derived from a data (105) representing the bank account number attached to the payment instrument (17).

10. The terminal according to claim 9, **characterized in that** it further includes means for generating the identifier (22) of the mobile terminal (12) and the personal cryptogram (21) by the payment application (24).

11. A server for generating a first token (11) comprising a means for generating a first token (103) derived from a payment instrument (17) of a subscriber, **characterized in that** it further comprises,
- a means for pairing an identifier (22) of the mobile terminal (12) and a personal cryptogram (21) of the subscriber with the payment instrument (17),
- a means for verifying a second secure payment token (104) generated by the encryption of at least the first token (103), transaction data, the identifier (22) of the mobile terminal and the personal cryptogram (21),
**characterized in that**:
- the pairing (36) is carried out when the payment instrument (17) is recorded in the payment application (24),
- the first token (103) is a random data derived from a data (105) representing the bank account number attached to the payment instrument (17).

12. The server according to claim 11, **characterized in that** the identifier (22) of the mobile terminal and the personal cryptogram (21) of the subscriber are received from an authentication server (10).

13. The server according to claim 11 or 12, **characterized in that** the first token (103) is generated by means of a random generator depending on at least one data (105) representing the bank account number attached to the payment instrument (17).
